# EUROPEAN PATENT APPLICATION

(11) **EP 4 790 117 A1**
(43) Date of publication of application: **12.08.2026**
(21) Application number: 24889014.7
(22) Date of filing: 29.10.2024
(51) Int. Cl.: C09J 197/00, C09J 11/04, C09D 197/00, C09D 7/61, C08K 3/22, C08K 3/28

(54) **ADHESIVE COMPOSITION FOR RUBBER AND ARTICLE CONTAINING SAME**

(30) Priority: 10.11.2023 KR 20230155545; 28.10.2024 KR 20240148908
(71) Applicant: Kolon Industries, Inc., Seoul 07793 (KR)
(72) Inventor: LEE, Sung Gyu, Seoul 07793 (KR); JEON, Ok Hwa, Seoul 07793 (KR); LEE, Sang Woo, Seoul 07793 (KR)
(74) Representative: Vossius & Partner Patentanwälte Rechtsanwälte mbB
(86) International application number: PCT/KR2024/016640
(87) International publication number: WO 2025/100826

(57) **Abstract**

The present invention relates to an adhesive composition for rubber and an article comprising the same. The adhesive composition for rubber according to the present invention comprises naturally derived sustainable components, is applicable to various rubbers, and can exhibit excellent adhesion and fatigue resistance.

## Description

### [TECHNICAL FIELD]

The present invention relates to an adhesive composition for rubber applicable to various types of rubber, and to an article comprising the same.

### [BACKGROUND OF ART]

Rubber is a material that is flexible and can be easily deformed. Articles made of rubber are generally manufactured through vulcanization molding.

Vulcanization molding is a process of molding a rubber composition to which sulfur is added under high temperature and high pressure conditions, and may provide articles having various and complex shapes while maintaining the properties of rubber.

Depending on the size and shape of the article to be manufactured, the conditions or duration required for performing vulcanization molding may vary. For example, when manufacturing a large and complex-shaped article using a large amount of a rubber composition, such as a large industrial tire, vulcanization molding is carried out for a long period of time under more severe conditions in order to ensure sufficient vulcanization in the interior of the article.

However, when vulcanization molding is performed for a long period of time, intrinsic physical properties of the rubber may be deteriorated and the fatigue performance of the article may become inferior.

Accordingly, there is a need for a means capable of preventing degradation of physical properties of rubber under high temperature and high pressure conditions and further improving the performance of the rubber.

### [DETAILED DESCRIPTION OF THE INVENTION]

### [Technical Problem]

An object of the present invention is to provide an adhesive composition for rubber that is applicable to various types of rubber and exhibits excellent adhesion and fatigue resistance.

Another object of the present invention is to provide an article comprising the adhesive composition for rubber.

### [Technical Solution]

Hereinafter, adhesive compositions for rubber according to embodiments of the present invention, and articles comprising the same, will be described.

Unless otherwise defined herein, all technical and scientific terms have the same meanings as generally understood by a person of ordinary skill in the art to which the present invention pertains. The terms used herein are for the purpose of describing specific embodiments only and are not intended to limit the present invention.

As used herein, singular forms include plural forms as well unless the context clearly indicates otherwise.

As used herein, the term "comprising" specifies the presence of stated features, regions, integers, steps, operations, elements and/or components, but does not preclude the presence or addition of one or more other features, regions, integers, steps, operations, elements, components and/or groups.

The present invention may be embodied in various forms and may be modified in various ways. Specific embodiments will be illustrated and described in detail below. However, this is not intended to limit the present invention to the specific disclosed forms, and it should be understood that all modifications, equivalents, and substitutes falling within the scope of the present invention are included.

When a positional relationship between two parts is described using terms such as "on," "above," "below," or "next to," one or more intervening elements may be present between the two parts unless the term "directly" or "immediately" is used.

When a temporal relationship is described using terms such as "after," "following," "next," or "before," intervening steps may occur unless the term "directly" or "immediately" is used.

As used herein, the term "at least one" includes any and all combinations of one or more of the associated items.

Terms including ordinal numbers such as "first" and "second" are used only to distinguish one component from another and do not limit the components. For example, a first component may be referred to as a second component, and vice versa, without departing from the scope of the present invention.

According to one embodiment of the present invention,
an adhesive composition for rubber is provided, comprising, based on 100 parts by weight of the total composition:
15 to 75 parts by weight of a polyphenol compound;
0.5 to 10.5 parts by weight of a first basic compound;
0.05 to 1.05 parts by weight of a second basic compound; and
a balance of a solvent.

Conventionally, adhesive compositions for rubber generally include a resorcinol-formaldehyde condensate. However, the resorcinol-formaldehyde condensate is harmful to the human body and has a drawback in that post-treatment of adhesive waste liquid containing the same is difficult.

Accordingly, as a result of continued research conducted by the present inventors, it has been confirmed that the adhesive composition for rubber satisfying the composition of the above embodiment includes a naturally derived sustainable component and is environmentally friendly. The composition is applicable to various rubbers and exhibits excellent adhesion and fatigue resistance.

According to one embodiment of the present invention, the adhesive composition for rubber comprises a polyphenol compound, a basic compound, and a solvent.

The polyphenol compound is a type of aromatic alcohol compound found in plants and has a plurality of hydroxyl groups. For example, the polyphenol compound may be obtained from plant bark, oak galls, leaves, or the like.

The polyphenol compound may form a condensate thereof through hydrogen bonding and/or hydrophobic interactions to provide appropriate cohesion to the adhesive composition for rubber. The polyphenol compound may increase the tackiness of the adhesive composition for rubber to improve bonding strength with rubber. In addition, the polyphenol compound has a plurality of aromatic rings, thereby enabling the expression of excellent adhesion and fatigue resistance.

Preferably, the polyphenol compound is a naturally derived compound. A naturally derived polyphenol compound is environmentally friendly as a sustainable component and enables expression of superior adhesion compared to an artificially synthesized polyphenol compound.

For example, a naturally derived polyphenol compound may exhibit an absorption peak at a wavenumber of 1650 cm⁻¹ or less when analyzed by infrared spectroscopy. In contrast, a synthesized polyphenol compound exhibits an absorption peak at a wavenumber of about 1707 cm⁻¹, which is presumed to result from the formation of a greater amount of units including C=O bonds during synthesis as compared to a naturally derived polyphenol compound. As the number of C=O bonds in the molecule increases, affinity with water increases, such that a composition including a synthesized polyphenol compound may become relatively diluted and exhibit reduced adhesion. Accordingly, the polyphenol compound is preferably a naturally derived compound.

Preferably, the polyphenol compound may be at least one compound selected from the group consisting of tannic acid, gallotannins, and ellagitannins. More preferably, the polyphenol compound may be tannic acid.

According to one embodiment of the present invention, the polyphenol compound may be included in an amount of 15 to 75 parts by weight, based on 100 parts by weight of the total composition.

Specifically, the polyphenol compound may be included in an amount of 15 parts by weight or more, alternatively 17.5 parts by weight or more, alternatively 20 parts by weight or more; and 75 parts by weight or less, alternatively 72.5 parts by weight or less, alternatively 70 parts by weight or less.

In order to enable the expression of sufficient adhesion, the polyphenol compound is preferably included in an amount of 15 parts by weight or more, alternatively 17.5 parts by weight or more, alternatively 20 parts by weight or more. However, when the content of the polyphenol compound is excessively high, the viscosity of the adhesive composition for rubber may increase excessively. Accordingly, the polyphenol compound is preferably included in an amount of 75 parts by weight or less, alternatively 72.5 parts by weight or less, alternatively 70 parts by weight or less.

Preferably, based on 100 parts by weight of the total composition, the polyphenol compound may be included in an amount of 15 to 75 parts by weight, alternatively 17.5 to 75 parts by weight, alternatively 17.5 to 72.5 parts by weight, alternatively 20 to 72.5 parts by weight, alternatively 20 to 70 parts by weight.

According to one embodiment of the present invention, the adhesive composition for rubber may include two or more basic compounds, and preferably may include a first basic compound and a second basic compound.

Preferably, the first basic compound may be at least one compound selected from the group consisting of ammonia (NH₃), sodium carbonate (Na₂CO₃), potassium hydroxide (KOH), and magnesium hydroxide (Mg(OH)₂). More preferably, the first basic compound may be ammonia.

The second basic compound may be sodium hydroxide (NaOH).

As described above, the polyphenol compound forms a condensate thereof through hydrogen bonding and/or hydrophobic interactions to provide appropriate cohesion to the adhesive composition for rubber. The first basic compound serves as a component acting as a crosslinking agent in the condensate formation of the polyphenol compound, thereby enabling improved cohesion and excellent adhesion strength in the adhesive composition for rubber.

The second basic compound allows the adhesive composition for rubber to have a hydrogen ion concentration (pH) within an appropriate range, thereby promoting the condensate formation reaction of the polyphenol compound and the reaction between the polyphenol compound and the first basic compound during preparation of the adhesive composition.

By including both the first basic compound and the second basic compound, the adhesive composition for rubber secures favorable conditions under which aggregation or crosslinking of the polyphenol compound can occur and exhibits stable adhesion performance with respect to various rubbers. If the adhesive composition for rubber includes only one of the first basic compound and the second basic compound, inferior adhesion strength that does not reach the level intended to be achieved by the present invention may be exhibited.

According to one embodiment of the present invention, the first basic compound may be included in an amount of 0.5 to 10.5 parts by weight and the second basic compound may be included in an amount of 0.05 to 1.05 parts by weight, based on 100 parts by weight of the total composition.

Specifically, the first basic compound may be included in an amount of 0.5 parts by weight or more, alternatively 0.6 parts by weight or more, alternatively 0.7 parts by weight or more, alternatively 0.8 parts by weight or more, alternatively 0.9 parts by weight or more, alternatively 1.0 part by weight or more; and 10.5 parts by weight or less, alternatively 10.4 parts by weight or less, alternatively 10.3 parts by weight or less, alternatively 10.2 parts by weight or less, alternatively 10.1 parts by weight or less, alternatively 10.0 parts by weight or less. The second basic compound may be included in an amount of 0.05 parts by weight or more, alternatively 0.06 parts by weight or more, alternatively 0.07 parts by weight or more, alternatively 0.08 parts by weight or more, alternatively 0.09 parts by weight or more, alternatively 0.1 part by weight or more; and 1.05 parts by weight or less, alternatively 1.04 parts by weight or less, alternatively 1.03 parts by weight or less, alternatively 1.02 parts by weight or less, alternatively 1.01 parts by weight or less, alternatively 1 part by weight or less.

In order to form conditions under which aggregation or crosslinking of the polyphenol compound can occur, the first basic compound is preferably included in an amount of 0.5 parts by weight or more, and the second basic compound is preferably included in an amount of 0.05 parts by weight or more. However, when the contents of the basic compounds are excessively high, adhesion and fatigue resistance of the adhesive composition for rubber may decrease. Accordingly, the first basic compound is preferably included in an amount of 10.5 parts by weight or less, and the second basic compound is preferably included in an amount of 1.05 parts by weight or less.

Preferably, based on 100 parts by weight of the total composition, the first basic compound may be included in an amount of 0.5 to 10.5 parts by weight, alternatively 0.6 to 10.5 parts by weight, alternatively 0.7 to 10.5 parts by weight, alternatively 0.8 to 10.5 parts by weight, alternatively 0.9 to 10.5 parts by weight, alternatively 1.0 to 10.5 parts by weight, alternatively 1.0 to 10.4 parts by weight, alternatively 1.0 to 10.3 parts by weight, alternatively 1.0 to 10.2 parts by weight, alternatively 1.0 to 10.1 parts by weight, alternatively 1.0 to 10 parts by weight. The second basic compound may be included in an amount of 0.05 to 1.05 parts by weight, alternatively 0.06 to 1.05 parts by weight, alternatively 0.07 to 1.05 parts by weight, alternatively 0.08 to 1.05 parts by weight, alternatively 0.09 to 1.05 parts by weight, alternatively 0.1 to 1.05 parts by weight, alternatively 0.1 to 1.04 parts by weight, alternatively 0.1 to 1.03 parts by weight, alternatively 0.1 to 1.02 parts by weight, alternatively 0.1 to 1.01 parts by weight, alternatively 0.1 to 1.0 part by weight.

The weight ratio of the first basic compound to the second basic compound (weight of the first basic compound : weight of the second basic compound) may be 1:0.01 to 1:1.

In order to enable the effects resulting from the combined use of the first basic compound and the second basic compound, the weight ratio of the first basic compound to the second basic compound is preferably 1:0.010 or more, alternatively 1:0.011 or more, alternatively 1:0.012 or more, alternatively 1:0.013 or more, alternatively 1:0.014 or more. However, when the weight ratio is excessively high (that is, when the relative weight of the first basic compound is excessively low), the efficiency of the condensate formation reaction of the polyphenol compound and the efficiency of the reaction between the polyphenol compound and the first basic compound may decrease, and physical properties of the adhesive composition for rubber may become relatively inferior. Accordingly, the weight ratio of the first basic compound to the second basic compound is preferably 1:1 or less, alternatively 1:0.9 or less, alternatively 1:0.8 or less, alternatively 1:0.7 or less, alternatively 1:0.6 or less.

Preferably, the weight ratio of the first basic compound to the second basic compound (weight of the first basic compound : weight of the second basic compound) may be 1:0.010 to 1:1, alternatively 1:0.011 to 1:1, alternatively 1:0.011 to 1:0.9, alternatively 1:0.012 to 1:0.9, alternatively 1:0.012 to 1:0.8, alternatively 1:0.013 to 1:0.8, alternatively 1:0.013 to 1:0.7, alternatively 1:0.014 to 1:0.7, alternatively 1:0.014 to 1:0.6.

According to one embodiment of the present invention, based on 100 parts by weight of the total composition, a balance of a solvent may be included together with the polyphenol compound, the first basic compound, and the second basic compound.

Preferably, the solvent may be water. The water may be purified water, distilled water, deionized water, demineralized water, or the like.

According to one embodiment of the present invention, in the adhesive composition for rubber, the polyphenol compound may be tannic acid, the first basic compound may be ammonia, the second basic compound may be sodium hydroxide, and the solvent may be water.

According to one embodiment of the present invention, the adhesive composition for rubber may have a solid content of 26.5 to 85.0 wt%.

As used herein, the term "solid content" refers to the content of effective components remaining after evaporation of liquid components contained in the adhesive composition for rubber. Conditions for evaporating the liquid components are not particularly limited, and for example, evaporation may be performed at a temperature of about 70 °C to 100 °C for 0.5 hours to 5 hours.

Specifically, the solid content of the adhesive composition for rubber may be 26.5 wt% or more, alternatively 27.0 wt% or more, alternatively 27.5 wt% or more; and 85.0 wt% or less, alternatively 84.0 wt% or less, alternatively 83.0 wt% or less, alternatively 82.0 wt% or less, alternatively 81.0 wt% or less, alternatively 80.0 wt% or less, alternatively 79.0 wt% or less, alternatively 78.0 wt% or less.

When the solid content of the adhesive composition for rubber is excessively low, pinholes may occur during coating of the composition and drying efficiency may decrease. Accordingly, the solid content of the adhesive composition for rubber is preferably 26.5 wt% or more, alternatively 27.0 wt% or more, alternatively 27.5 wt% or more. However, when the solid content is excessively high, coatability of the composition may decrease and adhesion strength may become non-uniform due to increased viscosity. Accordingly, the solid content of the adhesive composition for rubber is preferably 85.0 wt% or less, alternatively 84.0 wt% or less, alternatively 83.0 wt% or less, alternatively 82.0 wt% or less, alternatively 81.0 wt% or less, alternatively 80.0 wt% or less, alternatively 79.0 wt% or less, alternatively 78.0 wt% or less.

More preferably, the solid content of the adhesive composition for rubber may be 26.5 to 85.0 wt%, alternatively 27.0 to 85.0 wt%, alternatively 27.0 to 84.0 wt%, alternatively 27.0 to 83.0 wt%, alternatively 27.0 to 82.0 wt%, alternatively 27.0 to 81.0 wt%, alternatively 27.0 to 80.0 wt%, alternatively 27.5 to 80.0 wt%, alternatively 27.5 to 79.0 wt%, alternatively 27.5 to 78.0 wt%.

The adhesive composition for rubber is applicable to various rubbers.

For example, the adhesive composition for rubber may be used for bonding rubber to rubber. As another example, the adhesive composition for rubber may be coated on an outer surface or an inner surface of rubber to improve fatigue resistance.

Meanwhile, according to another embodiment of the invention,
there is provided an article comprising a rubber part and a coating layer formed on the rubber part,
wherein the coating layer comprises the adhesive composition for rubber.

The rubber part may be any member including a rubber material or made of rubber.

A coating layer including the adhesive composition for rubber may be formed on the rubber part. The coating layer may be formed on an outer surface or an inner surface of the rubber part. The coating layer may be formed on at least a portion or the entirety of the rubber part.

The coating layer may be formed by coating the adhesive composition for rubber onto the rubber part, attaching a layer including the adhesive composition for rubber to the rubber part, or immersing the rubber part in the adhesive composition for rubber.

The coating layer may further include a rubber reinforcing material together with the adhesive composition for rubber. The rubber reinforcing material may include organic or inorganic particles, fibers, fabrics, or combinations thereof.

The type of the article is not particularly limited as long as it includes the rubber part. For example, the article may be a tire, a hose, a rubber belt, a rubber sheet, or a rubber rope.

By including the coating layer comprising the adhesive composition for rubber, the article exhibits excellent adhesion and fatigue resistance.

In addition, since the coating layer is formed from the adhesive composition for rubber satisfying the above-described composition, the coating layer may exhibit inherent colors in dark brown and silver tones.

According to one embodiment, the coating layer may exhibit L*a*b* color values of 49.00 ≤ L* ≤ 55.00, 9.00 ≤ a* ≤ 13.00, and 11.00 ≤ b* ≤ 15.00, as measured using a colorimeter. Here, the L*a*b* color values are components of the color coordinates specified by the Commission Internationale de I'Eclairage (CIE), wherein the L* value represents lightness, the a* value represents the degree of red and green, and the b* value represents the degree of yellow and blue.

Specifically, since the coating layer is formed from the adhesive composition for rubber satisfying the above-described composition, the coating layer may exhibit, as measured using a colorimeter, an L* value of 49.00 to 55.00, or 49.50 to 55.00, or 49.50 to 54.50, or 50.00 to 54.50; an a* value of 9.00 to 13.00, or 9.05 to 13.00, or 9.05 to 12.95, or 9.10 to 12.95, or 9.10 to 12.90; and a b* value of 11.00 to 15.00, or 11.05 to 15.00, or 11.05 to 14.95, or 11.10 to 14.95.

According to another embodiment, the coating layer may have a color difference value (ΔE*) satisfying Equation 1 below: $0 \leq ΔE * \leq 4.50$

In Equation 1, ΔE* is a color difference value exhibited by the coating layer, and is obtained by the following calculation formula from L*a*b* chromaticity values measured using a colorimeter: [(L^{*}₁ - L^{*}₀)² + (a^{*}₁ - a^{*}₀)² + (b^{*}₁ - b^{*}₀)²]^{1/2},

Here, the L^{*}₀, a^{*}₀, and b^{*}₀ values are chromaticity values exhibited by a reference coating layer serving as an evaluation standard, and the L*₁, a*₁, and b*₁ values are chromaticity values exhibited by a coating layer to be measured.

Specifically, since the coating layer is formed from the adhesive composition for rubber satisfying the above-described composition, the coating layer may have a color difference value (ΔE*) of 4.50 or less, or 4.40 or less, or 4.30 or less, or 4.20 or less, or 4.10 or less. Preferably, the coating layer may have a color difference value (ΔE*) of 0 to 4.50, or 0 to 4.40, or 0 to 4.30, or 0 to 4.20, or 0 to 4.10.

### [ADVANTAGEOUS EFFECTS]

The adhesive composition for rubber according to the present invention includes a naturally derived sustainable component, is applicable to various rubbers, and exhibits excellent adhesion and fatigue resistance.

### [DETAILED DESCRIPTION OF THE EMBODIMENTS]

Hereinafter, preferred embodiments are provided to facilitate understanding of the present invention. However, the following embodiments are presented for illustrative purposes only, and the present invention is not limited thereto.

### Examples and Comparative Examples

Compositions of the Examples and Comparative Examples were prepared by mixing the components in the amounts shown in Tables 1 to 6 below. The amount of each component is expressed in parts by weight based on 100 parts by weight of the total weight of the composition. The compositions were prepared by mixing the respective components and stirring the mixture for 24 hours at room temperature of 20 °C.

In the compositions, tannic acid (provided by DUKSAN GENERAL SCIENCE) was used as the polyphenol compound, ammonia (provided by DUKSAN GENERAL SCIENCE) was used as the first basic compound, sodium hydroxide (provided by DUKSAN GENERAL SCIENCE) was used as the second basic compound, and distilled water was used as the solvent.

**[Table 1]**

| Component | Example | Example | Example | Example | Example | Example |
|---|---|---|---|---|---|---|
| | 1 | 2 | 3 | 4 | 5 | 6 |
| Solvent | 42.9 | 42.8 | 42.7 | 42.6 | 42.5 | 42.4 |
| Polyphenol compound | 50 | 50 | 50 | 50 | 50 | 50 |
| First basic compound (B1) | 7 | 7 | 7 | 7 | 7 | 7 |
| Second basic compound (B2) | 0.1 | 0.2 | 0.3 | 0.4 | 0.5 | 0.6 |
| Solid content (wt%) | 57.1 | 57.2 | 57.3 | 57.4 | 57.5 | 57.6 |
| B1:B2 (weight ratio) | 1:0.014 | 1:0.029 | 1:0.043 | 1:0.057 | 1:0.071 | 1:0.086 |

**[Table 2]**

| Component | Example 7 | Example 8 | Example 9 | Example 10 | Example 11 | Example 12 |
|---|---|---|---|---|---|---|
| Solvent | 42.3 | 42.2 | 42.1 | 42 | 72.4 | 62.4 |
| Polyphenol compound | 50 | 50 | 50 | 50 | 20 | 30 |
| First basic compound (B1) | 7 | 7 | 7 | 7 | 7 | 7 |
| Second basic compound (B2) | 0.7 | 0.8 | 0.9 | 1 | 0.6 | 0.6 |
| Solid content (wt%) | 57.7 | 57.8 | 57.9 | 58 | 27.6 | 37.6 |
| B1:B2 (weight ratio) | 1:0.100 | 1:0.114 | 1:0.129 | 1:0.143 | 1:0.086 | 1:0.086 |

**[Table 3]**

| Component | Example 13 | Example 14 | Example 15 | Example 16 | Example 17 | Example 18 |
|---|---|---|---|---|---|---|
| Solvent | 52.4 | 32.4 | 22.4 | 48.4 | 47.4 | 46.4 |
| Polyphenol compound | 40 | 60 | 70 | 50 | 50 | 50 |
| First basic compound (B1) | 7 | 7 | 7 | 1 | 2 | 3 |
| Second basic compound (B2) | 0.6 | 0.6 | 0.6 | 0.6 | 0.6 | 0.6 |
| Solid content (wt%) | 47.6 | 67.6 | 77.6 | 51.6 | 52.6 | 53.6 |
| B1:B2 (weight ratio) | 1:0.086 | 1:0.086 | 1:0.086 | 1:0.6 | 1:0.3 | 1:0.2 |

**[Table 4]**

| Component | Example 19 | Example 20 | Example 21 | Example 22 | Example 23 | Example 24 |
|---|---|---|---|---|---|---|
| Solvent | 45.4 | 44.4 | 43.4 | 41.4 | 40.4 | 39.4 |
| Polyphenol compound | 50 | 50 | 50 | 50 | 50 | 50 |
| First basic compound (B1) | 4 | 5 | 6 | 8 | 9 | 10 |
| Second basic compound (B2) | 0.6 | 0.6 | 0.6 | 0.6 | 0.6 | 0.6 |
| Solid content (wt%) | 54.6 | 55.6 | 56.6 | 58.6 | 59.6 | 60.6 |
| B1:B2 (weight ratio) | 1:0.15 | 1:0.12 | 1:0.1 | 1:0.075 | 1:0.067 | 1:0.06 |

**[Table 5]**

| Component | Comparative Example 1 | Comparative Example 2 | Comparative Example 3 | Comparative Example 4 |
|---|---|---|---|---|
| Solvent | 43 | 41.9 | 82.4 | 12.4 |
| Polyphenol compound | 50 | 50 | 10 | 80 |
| First basic compound (B1) | 7 | 7 | 7 | 7 |
| Second basic compound (B2) | 0 | 1.1 | 0.6 | 0.6 |
| Solid content (wt%) | 57 | 58.1 | 17.6 | 87.6 |
| B1:B2 (weight ratio) | - | 1:0.157 | 1:0.086 | 1:0.086 |

**[Table 6]**

| Component | Comparative Example 5 | Comparative Example 6 | Comparative Example 7 | Comparative Example 8 |
|---|---|---|---|---|
| Solvent | 49.4 | 38.4 | 42.9 | 48.4 |
| Polyphenol compound | 50 | 50 | 50 | 50 |
| First basic compound (B1) | 0 | 11 | 7 | 1 |
| Second basic compound (B2) | 0.6 | 0.6 | 0.01 | 1.1 |
| Solid content (wt%) | 50.6 | 61.6 | 57.01 | 52.1 |
| B1:B2 (weight ratio) | - | 1:0.055 | 1:0.001 | 1:1.1 |

### Test Example 1

Two laminates were prepared by sequentially stacking a rubber sheet having a thickness of 0.6 mm, a tire cord fabric, and a rubber sheet having a thickness of 0.6 mm. A coating layer was formed by coating the composition according to the Examples and Comparative Examples to a thickness of 60 µm on one of the two laminates, and the other laminate was then stacked on the coating layer. The resulting structure was vulcanized at 160 °C under a pressure of 60 kg/cm² for 20 minutes, and then cut into a width of 1 inch to prepare specimens.

A peel test was performed on the prepared specimens using a universal testing machine (Instron) at 25 °C and a crosshead speed of 125 mm/min to evaluate the adhesion strength of the coating layer. The adhesion strength was determined as the average of three measurements of the load at which peeling occurred in the specimen. The measured values were normalized based on the value of the specimen to which the composition of Example 1 was applied, and are expressed as relative values.

### Test Example 2

Two laminates were prepared by sequentially stacking a rubber sheet having a thickness of 3.2 mm, a tire cord fabric, and a rubber sheet having a thickness of 0.5 mm. A coating layer was formed by coating the composition according to the Examples and Comparative Examples to a thickness of 60 µm on the 0.5 mm-thick rubber sheet of each laminate, and the two laminates were bonded to each other via the coating layer. The resulting structure was vulcanized at 160 °C under a pressure of 60 kg/cm² for 20 minutes, and then cut into a width of 1 inch to prepare specimens.

A dynamic adhesion test was performed on the prepared specimens using a rotary bending fatigue testing machine at 100 °C and a speed of 180 rpm. After the test, the adhesion strength of the specimens was determined according to the following calculation formula: 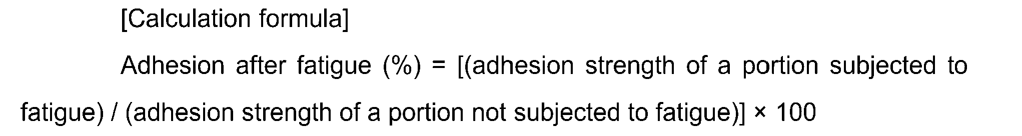 Adhesion after fatigue (%) = [(adhesion strength of a portion subjected to fatigue) / (adhesion strength of a portion not subjected to fatigue)] × 100

Here, the portion subjected to fatigue and the portion not subjected to fatigue may be distinguished by markings applied in advance so that each portion is identifiable prior to conducting the fatigue test. Alternatively, even without such markings, the fatigued portion and the non-fatigued portion are distinguishable by visual inspection.

The test was conducted three times and the average value was calculated. The calculated values were normalized based on the value of the specimen to which the composition of Example 1 was applied, and are expressed as relative values.

### Test Example 3

A coating layer specimen was prepared by coating the composition according to the Examples and Comparative Examples to a thickness of 60 µm on a transparent release film and drying the same.

L*a*b* color values of the coating layer specimen were measured using a colorimeter (model: Color-Eye^{®} 7000A, manufacturer: X-Rite). A color difference value (ΔE*) was obtained from the measured color values according to the following calculation formula: [(L^{*}₁ - L^{*}₀)² + (a^{*}₁ - a^{*}₀)² + (b^{*}₁ - b^{*}₀)²]^{1/2}.

In the calculation formula, the L^{*}₀, a^{*}₀, and b^{*}₀ values are the color values exhibited by a reference coating layer specimen (in this experiment, the specimen of Example 1 was used as the evaluation standard), and the L^{*}₁, a^{*}₁, and b^{*}₁ values are the color values exhibited by the coating layer specimen to be measured.

**[Table 7]**

| | Example 1 | Example 2 | Example 3 | Example 4 | Example 5 | Example 6 |
|---|---|---|---|---|---|---|
| Peel test | 100 | 102.8 | 105.7 | 107.5 | 117.9 | 127.4 |
| Dynamic adhesion Test | 100 | 100.9 | 102.7 | 105.5 | 110.0 | 117.3 |
| L^{*}₁ | 53.65 | 53.86 | 53.88 | 53.91 | 53.94 | 53.98 |
| a^{*}1 | 10.62 | 11.14 | 11.22 | 11.23 | 11.26 | 11.28 |
| b^{*}₁ | 12.45 | 12.37 | 12.44 | 12.48 | 12.52 | 12.56 |
| Δ E^{*} | 0 | 0.57 | 0.64 | 0.66 | 0.71 | 0.75 |

**[Table 8]**

| | Example 7 | Example 8 | Example 9 | Example 10 | Example 11 | Example 12 |
|---|---|---|---|---|---|---|
| Peel test | 121.7 | 117.0 | 115.1 | 114.2 | 103.8 | 105.7 |
| Dynamic adhesion Test | 113.6 | 110.9 | 109.1 | 108.2 | 103.6 | 105.5 |
| L^{*}₁ | 54.02 | 54.05 | 54.06 | 54.1 | 50.1 | 51.1 |
| a^{*}1 | 11.31 | 11.35 | 11.38 | 11.4 | 9.12 | 9.51 |
| b^{*}₁ | 12.57 | 12.59 | 12.61 | 12.63 | 11.12 | 11.67 |
| Δ E^{*} | 0.79 | 0.84 | 0.88 | 0.92 | 4.08 | 2.89 |

**[Table 9]**

| | Example 13 | Example 14 | Example 15 | Example 16 | Example 17 | Example 18 |
|---|---|---|---|---|---|---|
| Peel test | 112.3 | 116.0 | 115.1 | 98.1 | 100.9 | 103.8 |
| Dynamic adhesion Test | 108.2 | 110.9 | 108.2 | 97.3 | 98.2 | 105.5 |
| L^{*}₁ | 52.43 | 53.91 | 54.5 | 53.72 | 53.72 | 53.74 |
| a^{*}1 | 10.44 | 11.91 | 12.9 | 11.12 | 11.14 | 11.21 |
| b^{*}₁ | 12.21 | 13.62 | 14.92 | 12.66 | 12.76 | 12.78 |
| Δ E^{*} | 1.26 | 1.76 | 3.47 | 0.55 | 0.61 | 0.68 |

**[Table 10]**

| | Example 19 | Example 20 | Example 21 | Example 22 | Example 23 | Example 24 |
|---|---|---|---|---|---|---|
| Peel test | 105.7 | 112.3 | 117.9 | 122.6 | 119.8 | 118.9 |
| Dynamic adhesion Test | 105.5 | 107.3 | 110.0 | 117.3 | 115.5 | 110.0 |
| L^{*}₁ | 53.75 | 53.8 | 53.82 | 53.85 | 53.86 | 53.89 |
| a^{*}1 | 11.25 | 11.31 | 11.35 | 11.38 | 11.40 | 11.70 |
| b^{*}₁ | 12.85 | 12.92 | 13.12 | 13.21 | 13.35 | 13.48 |
| Δ E^{*} | 0.75 | 0.85 | 1.01 | 1.09 | 1.21 | 1.51 |

**[Table 11]**

| | Comparative Example 1 | Comparative Example 2 | Comparative Example 3 | Comparative Example 4 |
|---|---|---|---|---|
| Peel test | 77.4 | 85.8 | 69.8 | 84.0 |
| Dynamic adhesion Test | 76.4 | 80.9 | 69.1 | 80.0 |
| L^{*}₁ | 50.2 | 53.9 | 48.62 | 55.2 |
| a^{*}1 | 10.5 | 11.43 | 8.91 | 13.1 |
| b^{*}₁ | 12.1 | 12.73 | 10.72 | 15.21 |
| Δ E^{*} | 3.47 | 0.89 | 5.59 | 4.02 |

**[Table 12]**

| | Comparative Example 5 | Comparative Example 6 | Comparative Example 7 | Comparative Example 8 |
|---|---|---|---|---|
| Peel test | 73.6 | 84.9 | 76.1 | 74.1 |
| Dynamic adhesion Test | 67.3 | 76.4 | 73.2 | 69.2 |
| L^{*}₁ | 53.4 | 54.1 | 50.4 | 54.13 |
| a^{*}₁ | 11.11 | 11.71 | 12.1 | 12.12 |
| b^{*}₁ | 12.46 | 13.68 | 12.25 | 12.75 |
| Δ E^{*} | 0.55 | 1.70 | 3.58 | 1.60 |

Referring to the tables above, the specimens to which the adhesive compositions according to the embodiments were applied exhibited relatively excellent adhesion and fatigue resistance. In contrast, the specimens to which the adhesive compositions according to the Comparative Examples were applied exhibited significantly poor adhesion and fatigue resistance.

Although the present invention has been described above with reference to limited embodiments, the present invention is not limited thereto. Various modifications and variations may be made by a person of ordinary skill in the art to which the present invention pertains within the technical scope of the present invention and the equivalent scope of the claims set forth below.

## Claims

1. An adhesive composition for rubber comprising, based on 100 parts by weight of the total composition:
15 to 75 parts by weight of a polyphenol compound;
0.5 to 10.5 parts by weight of a first basic compound;
0.05 to 1.05 parts by weight of a second basic compound; and
the balance of a solvent.

2. The adhesive composition for rubber according to claim 1,
wherein the polyphenol compound is at least one compound selected from the group consisting of tannic acid, gallotannins, and ellagitannins.

3. The adhesive composition for rubber according to claim 1,
wherein the polyphenol compound is tannic acid.

4. The adhesive composition for rubber according to claim 1,
wherein the first basic compound is at least one compound selected from the group consisting of ammonia (NH₃), sodium carbonate (Na₂CO₃), potassium hydroxide (KOH), and magnesium hydroxide (Mg(OH)₂).

5. The adhesive composition for rubber according to claim 1,
wherein the first basic compound is ammonia.

6. The adhesive composition for rubber according to claim 1,
wherein the second basic compound is sodium hydroxide (NaOH).

7. The adhesive composition for rubber according to claim 1,
wherein a weight ratio of the first basic compound to the second basic compound (weight of the first basic compound : weight of the second basic compound) is 1 : 0.01 to 1 : 1.

8. The adhesive composition for rubber according to claim 1,
wherein the solvent is water.

9. The adhesive composition for rubber according to claim 1,
wherein the adhesive composition for rubber has a solid content of 26.5 to 85.0 wt%.

10. The adhesive composition for rubber according to claim 1,
wherein the polyphenol compound is tannic acid,
the first basic compound is ammonia,
the second basic compound is sodium hydroxide, and
the solvent is water.

11. An article comprising a rubber part and a coating layer formed on the rubber part,
wherein the coating layer comprises the adhesive composition according to claim 1.

12. The article according to claim 11,
wherein the coating layer exhibits L*a*b* chromaticity values of 49.00 ≤ L* ≤ 55.00, 9.00 ≤ a* ≤ 13.00, and 11.00 ≤ b* ≤ 15.00 as measured using a colorimeter.

13. The article according to claim 11,
wherein the coating layer satisfies Equation 1 below: $0 \leq ΔE * \leq 4.50$
wherein in Equation 1,
ΔE* is a color difference value exhibited by the coating layer and obtained by the following calculation formula from L*a*b* chromaticity values measured using a colorimeter: [(L^{*}₁ - L^{*}₀)² + (a^{*}₁ - a^{*}₀)² + (b^{*}₁ - b^{*}₀)²]^{1/2},
wherein the L^{*}₀, a^{*}₀, and b^{*}₀ values are chromaticity values exhibited by a reference coating layer serving as an evaluation standard, and the L^{*}₁, a^{*}₁, and b^{*}₁ values are chromaticity values exhibited by a coating layer to be measured.
